# EUROPEAN PATENT APPLICATION

(11) **EP 1 454 810 A2**
(43) Date of publication of application: **08.09.2004**
(21) Application number: 04388012.9
(22) Date of filing: 02.03.2004
(51) Int. Cl.: B62B 3/02

(54) **Container with a shelf**

(30) Priority: 04.03.2003 DK 200300337
(71) Applicant: Bekaert Handling Group A/S, 1304 Kobenhavn K (DK)
(72) Inventor: Egelund, Henrik, 5250 Odense SV. (DK)
(74) Representative: Andersen, Poul Hoeg

(57) **Abstract**

A container (1) comprising at least one upwardly extending wall (4) and at least one shelf (5) configured for being moved between an essentially vertical position and an essentially horizontal position, in which it rests on a resting support (14). Engagement means are provided at each side of the shelf (5), said engagement means comprising a laterally protruding slideway pin (8) in connection with the shelf (5), said slideway pin being in guiding engagement with an essentially vertical slideway (6) on the wall (4); and a lock and guide means (9) arranged on the shelf (5) or the wall (4) and above the sideway. The slideway (6) extends below a level of the resting support (14), and the resting support (14) is arranged at such horizontal distance (L) from the slideway (6) that the shelf (5) is able to assume a stable intermediate position between the essentially vertical position and the essentially horizontal position, in which intermediate position the shelf (5) is in abutment on the resting support (14) while simultaneously the slideway pin (8) rests in the lowermost part of the slideway (6).

## Description

The invention relates to a container comprising at least one upwardly extending wall and at least one shelf configured for being moved between an essentially vertical position and an essentially horizontal position, in which it rests on a resting support, wherein essentially identical cooperating engagement means are provided at each side of the shelf and on the at least one wall, said engagement means at each side of the shelf when in its vertical position comprising:
- a slideway pin protruding laterally at a lower end of the shelf and being in guiding engagement with an essentially vertical slideway on the wall; and
- a lock and guide means arranged on the shelf or the wall and provided above the slideway, which lock and guide means comprises a backwardly downwardly sloping lock face and a forwardly downwardly sloping guide face, said lock and guide faces being continuously coherent in a peak and able to engage with a locking protrusion provided on the opposite part.

Such container is known from FR-A-2 591 175 teaching a container with two sidewalls and a shelf which, in its collapsed state, serves as a bottom of the container. At its rear lower end the shelf is provided with laterally protruding slideway pins that are each in engagement with an upwardly and forwardly sloping slideway provided at the rear end of each sidewall. At each side the shelf is also provided with an outwardly protruding locking pin in engagement with a rearwardly downwardly sloping locking face when the shelf is in its vertical position. When the shelf is to be caused to its horizontal position it is pulled forwards and upwards whereby the locking pin leaves its engagement with the locking face, following which the shelf is able to drop freely to the horizontal position. That means that there is a considerable risk of a person being injured if the shelf is inexpediently let go and is allowed to drop freely to its horizontal position.

DE-U1-93 00 111 teaches another container with a rear wall, two sidewalls and two shelves that can each be moved between an essentially vertical resting position and a horizontal in-use position. At each side of each shelf there is, on the underside at the front or rear end, provided a brace that constitutes a slideway which is in engagement with a bar that extends transversally of the container between the two sidewalls. When the shelf is in its vertical position it is suspended either loosely downwards in the brace or it extends upwards while resting in the brace, while its rear end abuts on the rear container wall. When the shelf is to be moved from the vertical to the horizontal position, it is necessary to manually lift the shelf upwards, either to free the shelf from the abutment of its rear end against the rear container wall or for swinging the shelf upwards from a downwardly suspended position. The necessity of having to perform such manual lift of the shelf is undesirable as it involves a risk of occupational injury to the person who works with the container. Firstly, the person may have to perform several lifting operations a day, which may over time result in the person becoming worn down. Secondly, most often the manual lift must be performed in the vicinity of the rear container wall, which means that the person has to reach far into the container in order to be able to seize the shelf. This is very inconvenient for an ergonomical point of view and may entail sudden injuries and in the long run wearing down of that person. It is a further problem of that container that a shelf that points upwards when in its vertical position is able to fall freely to the horizontal position once it has been lifted clear of its locking engagement. This means that in connection with this container, too, there is a considerable risk of a person being injured, if the shelf is inexpediently let go and is allowed to fall freely to its horizontal position.

It is therefore the object of the present invention to provide a container with at least one shelf that can be moved from an essentially vertical position to a horizontal position, in which the risk of the shelf falling freely to its horizontal position is eliminated.

This is accomplished in that the container described above is configured in such a manner that the slideway extends down below a level of the resting support, and that the resting support is arranged at such horizontal distance from the slideway that the shelf is able to assume a stable intermediate position between the essentially vertical position and the essentially horizontal position, in which intermediate position the shelf abuts on the resting support while simultaneously the slideway pin rests in the lowermost part of the slideway.

Hereby it is accomplished that the shelf does not immediately drop to its horizontal position when it is released from the lock and guide means, whereby the risk of injury to the person who works with the container is reduced. Moreover, it provides improved access to the space underneath the shelf compared to the situation in which it is swung entirely to its horizontal position.

According to a preferred embodiment the resting support is provided to protrude from the at least one wall. Alternatively the resting plant may be provided on sidewalls that are optionally hinged to the at least one wall.

A sensible intermediate position is accomplished if the horizontal distance between the slideway and the resting support corresponds essentially to the length of the slideway. Hereby, in its intermediate position, the shelf is caused to assume an inclination of about 45° which is sufficient to ensure that it does not have a propensity to drop further downwards by itself.

The lock and guide means of the container is configured such that the shelf can be moved from its essentially vertical position to the horizontal position merely by applying a horizontal pull to it, the engagement between the locking protrusion and the sloping lock and guide faces ensuring that the shelf is released as a reaction to the horizontal pull. Thus, the shelf will still perform an upward movement, but the movement is now caused by the engagement of the sloping lock and guide faces with a locking protrusion and not by a manual lift. According to the preferred embodiment the lock and guide means is configured in connection with the wall, while the locking protrusion is arranged to protrude from the shelf at a distance from the slideway pin. Hereby the shelf is provided exclusively with protruding pins that may be situated in the plane of the shelf, whereby they do not extend beyond the construction height of the shelf. There are thus no parts that extend down into or up into the space below and above the shelf when it is in its horizontal in-use position.

Preferably the distance between the slideway pin and the locking protrusion is smaller than the distance between the lowermost part of the slideway and the peak of the lock and guide means. Hereby it is ensured that the shelf will always have to be lifted in order to lift the locking protrusion above the peak of the lock and guide means.

According to a particularly preferred embodiment the slideway is formed between a wire element and a corner post of the wall, and in particular the slideway and lock and guide means can be formed by folding of the same wire element. The use of a folded wire element for forming these parts makes the construction very simple and easy to clean.

According to a further embodiment the lock and guide means is configured in connection with the shelf, while the locking protrusion is arranged to protrude from the wall at a distance from the slideway. In principle, this embodiment corresponds to the first preferred embodiment as given above, however, it illustrates merely that the lock and guide means and locking protrusion may optionally be arranged on the wall and the shelf.

In that alternative embodiment, the distance between the slideway pin and the peak of the lock and guide means is preferably smaller than the distance between the locking protrusion and the lowermost part of the slideway. Hereby it is ensured that the shelf will always have to be lifted to take the peak of the lock and guide means above the locking protrusion.

Practice has shown that it is possible to accomplish a good release functionality as a result of a horizontal force on the shelf if the sloping lock and guide faces have an inclination of less than 45° and preferably about 35° to the horizontal, at least when the shelf is in its vertical position.

The invention will now be explained in further detail with reference to the drawing, wherein
Figure 1 shows a first embodiment of a container according to the invention;
Figures 2a-e show in steps how a shelf is moved from a vertical to a horizontal position of the container shown in Figure 1; and
Figure 3 shows a part of an alternative embodiment of a container according to the invention.

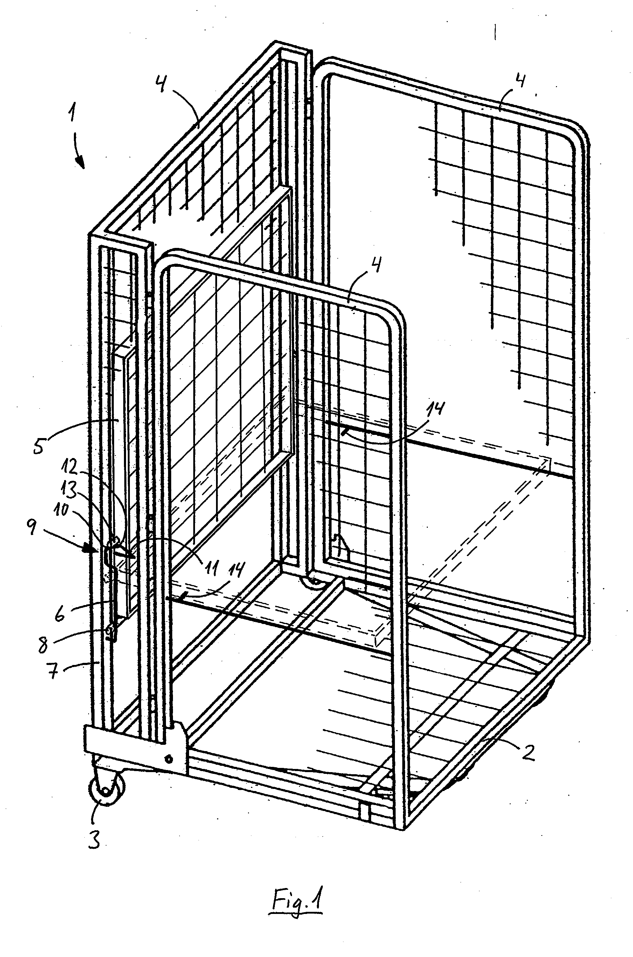

Figure 1 shows a container 1 of metal, which container 1 comprises a bottom 2 with wheels 3, three walls 4 in the form of two parallel and essentially identical sidewalls and a rear wall. The shown container is of the type where the sidewalls are split into two pieces, the foremost part of each sidewall being releasable from the bottom 2 and can be swung inwards whereby they overlap. The rearmost part of each sidewall is fixedly connected to the rear wall. Moreover the bottom 2 can be swung upwards whereby the container 1 takes up very little space when not in use. These features, however, are not a part of the present invention, and they will not be subject to further description herein. Thus, the invention is not limited to use in this type of container, rather it can be used in many other types of containers. Therefore specific reference will not be made to the sidewalls and to the rear wall, but rather just to walls, being, however, in the shown example the shown sidewalls and rear wall.

The container 1 also comprises a shelf 5, which is arranged between the two parallel walls 4 and can be moved from the shown vertical position to a horizontal position as outlined by dotted lines. It will be understood that when, in the following, it is indicated that the shelf 5 is in a vertical or essentially vertical position and a horizontal or essentially horizontal position, respectively, it means that the shelf 5 has a considerable expanse in the vertical and horizontal planes, respectively, but need not necessarily be completely vertical or horizontal. It should also be pointed out that the term "shelf" is to be understood in its wide sense and not just as a shelf arranged centrally in the container. Thus, the invention also lends itself for use if the "shelf' constitutes a bottom plate or a top plate of the container.

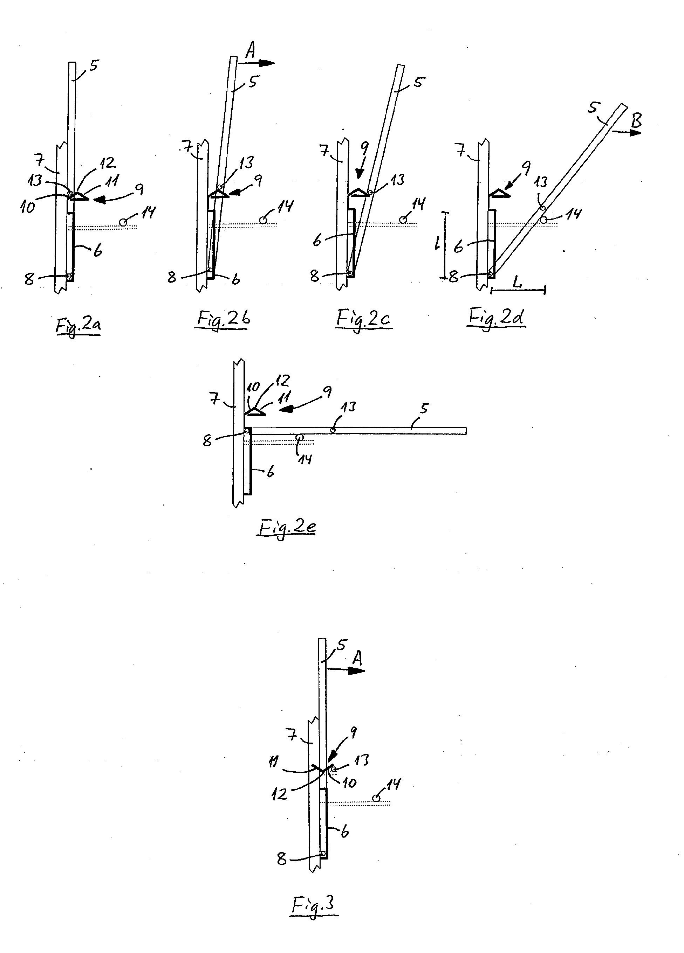

The shelf 5 engages with both of the parallel walls 4 by means of identical, co-operating engagement means that will be described in the following, reference being made to both Figure 1 and Figures 2a-e that all show a first embodiment of a container according to the invention. Figures 2a-e, however, show only a part of the container 1, viz a part of a wall 4, the shelf 5 and the cooperating engagement means.

At the one side, each of the two parallel walls 4 is provided with an essentially vertical slideway 6 that protrudes from a corner post 7 and it is also configured between a folded wire element and the corner post 7. At its lowermost end the shelf 5 is provided with a laterally extending slideway pin 8 that engages with the slideway 6 and can be moved vertically upwards and downwards therein.

Each of the two parallel walls 4 is also provided with a lock and guide means 9 that comprises a rearwardly downwardly sloping lock face 10 and a forwardly downwardly sloping guide face 11. The lock face 10 and the guide face 11 are continuously coherent in a peak 12 and, in the embodiment shown, it is also formed of the same folded wire element as the slideway 6. The shelf 5 is provided with a locking protrusion 13 that is configured for engaging with the lock and guide faces 10, 11 of the lock and guide means 9 as will be described in the following. The locking protrusion 13 is shown as a protruding pin, but of course it may also be configured in many other ways.

In figures 1 and 2a, the shelf 5 is shown in its vertical position, in which it is essentially in parallel with the third upwardly extending wall 4 that constitutes the rear wall of the container 1. It will appear how the slideway pin 8 of the shelf does not rest against the lowermost end of the slideway, but is rather suspended a distance above same. Conversely, the shelf 5 is hanging from the locking protrusion 13 that engages the lock face 10. The lock face 10 inclines so far rearwards and downwards that the weight of the shelf 5 makes the locking protrusion 13 slide so far back towards the rear wall of the container 1 as possible which means, in practice, until the locking protrusion 13 abuts on the corner post 7 of the wall 3 as will appear most clearly from Figure 2a.

The locking face 10 inclines by such angle as to ensure, firstly, that due to its weight the shelf 5 falls all the way back to the position shown in Figures 1 and 2a and, secondly, it allows the shelf 5 to be moved away from the vertical position to a horizontal position when a horizontal pull is applied to the shelf 5 above the level of the lock and guide means 9. Practice has shown that an inclination of about 35° is suitable when the container 1 and the shelf 5 are made of metal. However, the angle may and should, of course, be adapted to the construction of the individual container.

Owing to the engagement between the lock face 10 and the locking protrusion 13, the shelf 5 is thus secured when in the vertical position shown in Figures 1 and 2a. This means that even if the container 1 is taken across an uneven surface there is only a minimal risk of the shelf 5 leaping out of its engagement with the lock and guide means 9.

When the shelf 5 is to be moved from its vertical position to its horizontal position, a horizontal forward pull is applied to the shelf 5 above the level of the lock and guide means 9, eg by pulling the uppermost part as outlined by the arrow A in Figure 2b, where the shelf 5 has already moved from the vertical position shown in Figures 1 and 2a to a position, in which the locking protrusion 13 is situated at the peak 12 of the lock and guide means 9. This means that, when a horizontal pull is applied to the shelf 5, the engagement of the locking protrusion 13 with the sloping lock face means that the shelf 5 is shifted forwards and upwards as shown. It will appear that the slideway pin 8 has moved slightly upwards in the slideway 6. In this context it is important that the locking face 10 has an inclination that causes the shelf 5 to be displaced upwards due to the horizontal pull, thereby eliminating the need for lifting the shelf 5 manually.

When the horizontal pull in the shelf 5 is continued the locking protrusion 13 slides down the guide face 11 as shown in Figure 2c and beyond until the shelf 5 adjoins a resting support 14 that is connected to the wall 4 as outlined by dotted lines. This position is shown in Figure 2d, and the container 1 is, in accordance with the invention, configured such that the shelf 5 cannot on its own account fall further forwards when this position has been reached. As it is, it is hereby accomplished that even in case the shelf was unintentionally to fall forwards to this intermediate position, it would not continue to the horizontal position with the ensuing risk of a person located close to the shelf being hit by it. It should be noted that the minute the locking means 13 disengages from the lock and guide means 9, the shelf 5 falls slightly downwards until the slideway pin 8 is stopped at the bottom of the slideway 6.

A sensible intermediate position is accomplished by positioning of the resting abutment 14 in a horizontal distance L from the slideway 6, corresponding essentially to the length I of the slideway 6. As it is, it is hereby accomplished that, in its intermediate position, the shelf 5 assumes an inclination of about 45° which is sufficient to ensure that it does not have a propensity to fall further downwards by itself. At the same time this position of the shelf 5 provides good access to the space underneath the shelf 5 if so desired.

From the intermediate position shown in Figure 2d, a horizontal pull is yet again applied to the shelf 5 as outlined by the arrow B in Figure 2d. Hereby the shelf 5 slides forwards across the resting support 14, while simultaneously the slideway pin 8 slides upwards in the slideway 6 until the horizontal position of the shelf 5 shown in Figure 2e is reached. Preferably yet a resting abutment is arranged further ahead on the wall 4, which, however, is not shown.

When the shelf 5 is to be brought from the horizontal position shown in Figure 2e to the vertical position shown in Figures 1 and 2a, the foremost end is first lifted, whereby the slideway pin 8 at the rear end of the shelf 5 is displaced downwards in the slideway 6, until the intermediate position shown in Figure 2b is reached. Then a horizontal pressure is applied to the shelf 5, whereby it is caused to swing upwards about the slideway pin 8. At a point the locking protrusion 13 engages with the top face of the guide face 11 as shown in Figure 2c, and by a continued horizontal pressure the locking protrusion 13 is pushed above the peak 12 of the lock and guide means 9 (Figure 2b), following which the shelf 5 drops on its own account to its vertical position with the locking protrusion 13 engaging the lock face 10 and the rear post 7 of the wall 4.

Figure 3 shows a part of an alternative embodiment of a container according to the invention. For the sake of simplicity, the same reference numerals are used for the corresponding parts, albeit they have been modified structurally. In principle, this embodiment works in the same manner as the first embodiment shown in Figure 1 and 2a-e, the only structural difference being that the lock and guide means 9 is arranged on the shelf 5, while the locking protrusion 13 is arranged on the wall 4.

The lock and guide means 9 thus still comprises a rearwardly downwardly sloping lock face 10 and a forwardly downwardly sloping guide face 11 that are continuously coherent in a peak 12 that is oriented downwards in that case.

In Figure 3, the shelf 5 is shown in its vertical position where it is secured, hanging via the lock face 10 on the locking protrusion 13. When the shelf 5 is to be swung to the horizontal position, a horizontal pull is applied to the shelf 5 as outlined by the arrow A, whereby the engagement between the lock and guide means 9 and the locking protrusion 13 causes the shelf 5 to be first moved slightly upwards until the locking protrusion 13 reaches the peak 12. Then the shelf 5 falls down against the resting support 14 in the same manner as described above with reference to Figures 2a-e.

In principle the second embodiment shown in Figure 3 operates in the same manner as the first embodiment shown in Figures 1 and 2a-e. However it is illustrated that the cooperating engagement means in the form of the lock and guide means 9 and the locking protrusion 13 may optionally be arranged on the shelf 5 and the wall 4, respectively.

The invention was described with reference to two embodiments, but of course it is possible to perform further modifications without deviating from the idea of the invention. Thus, the container need not be of the type with two sidewalls and a rear wall; it may just as well comprise only two sidewalls or optionally just one wall, from where the shelf 5 is fastened and projects when it is in its horizontal in-use position. As mentioned previously the shelf may be a shelf arranged within a container or it may constitute a bottom plate or a top plate of the container. Moreover the invention may be used in connection with containers of both metal and plastics.

## Claims

1. A container (1) comprising at least one upwardly extending wall (4) and at least one shelf (5) configured for being moved between an essentially vertical position and an essentially horizontal position in which it rests on a resting support (14), wherein essentially identical cooperating engagement are provided at each side of the shelf (5) and on the at least one wall (4), said engagement means at each side of the shelf (5) comprising, when in its vertical position:
- a slideway pin (8) protruding laterally at a lower end of the shelf (5) and being in guiding engagement with an essentially vertical slideway (6) on the wall (4); and
- a lock and guide means (9) arranged on the shelf (5) or the wall (4) and above the slideway, which lock and guide means (9) comprises a backwardly downwardly sloping lock face (10) and a forwardly downwardly sloping guide face (11), said lock and guide faces (10, 11) being continuously coherent in a peak (12) and able to engage with a locking protrusion provided on the opposite part,
**characterised in** manner that the slideway (6) extends down below a level of the resting support (14); and that the resting support (14) is arranged at such horizontal distance (L) from the slideway (6) that the shelf (5) is able to assume a stable intermediate position between the essentially vertical position and the essentially horizontal position, in which intermediate position the shelf (5) abuts on the resting support (14) while simultaneously the slideway pin (8) rests in the lowermost part of the slideway (6).

2. A container according to claim 1, **characterised in that** the resting support is provided to project from the at least one wall (4).

3. A container according to claim 1 or 2, **characterized in that** the horizontal distance (L) between the slideway (6) and the resting abutment (14) corresponds essentially to the length (1) of the slideway.

4. A container according to any one of claims 1-3, **characterised in that** the lock and guide means (9) is configured in connection with the wall (4); and that the locking protrusion (13) is arranged to project from the shelf (5) at a distance from the slideway pin (8).

5. A container according to claim 4, **characterised in that** the distance between the slideway pin (8) and the locking protrusion (13) is smaller than the distance between the lowermost part of the slideway (6) and the peak (12) of the lock and guide means.

6. A container according to any one of claims 1-5, **characterised in that** the slideway (6) is configured between a wire element and a corner post (7) of the wall (4).

7. A container according to claim 6, **characterised in that** the slideway (6) and the lock and guide means (9) are formed by folding the same wire element.

8. A container according to any one of claims 1-3, **characterised in that** the lock and guide means (9) is configured in connection with the shelf (5), and that the locking protrusion (13) is arranged to project from the wall (4) at a distance from the slideway (6).

9. A container according to claim 8, **characterised in that** the distance between the slideway pin (8) and the peak (12) of the lock and guide means is smaller than the distance between the locking protrusion (13) and the lowermost part of the slideway (6).

10. A container according to any one of claims 1-9, **characterised in that** the sloping lock and guide faces (10, 11) have an inclination of less than 45° to the horizontal, at least when the shelf (5) is in its vertical position.

11. A container according to claim 10, **characterised in that** the sloping lock and guide faces (10, 11) have an inclination of about 35° to the horizontal, at least when the shelf (5) in its vertical position.
